Europäisches Patentamt

European Patent Office

Office européen des brevets

(11) Publication number: **0 457 342 A2**

## EUROPEAN PATENT APPLICATION

(21) Application number: 91108023.2

(22) Date of filing: 17.05.91

(51) Int. Cl.⁵: **B29C 67/24**, //B29K55:00,
B29L31:24

(30) Priority: 17.05.90 JP 125492/90

(43) Date of publication of application:
21.11.91 Bulletin 91/47

(84) Designated Contracting States:
BE DE DK FR GB IT NL SE

(71) Applicant: NIPPON ZEON CO., LTD.
6-1, Marunouchi 2-chome
Chiyoda-ku Tokyo 100(JP)

(72) Inventor: **Shuichi, Mitsuhori**
4-208, Higashinomachi, 525-1, Shinanocho
Totsuka-ku, Yokohama-shi, Kanagawa(JP)
Inventor: **Tokio, Kaneki**
1136-4, Kawaguchi-cho
Hachioji-shi, Tokyo(JP)

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) **Pipe with integrally moulded coupler and method therefor.**

(57) A coupler is integrally molded onto a plastic pipe section. The coupler is fabricated from a reaction solution comprising at least one norbornene monomer. The monomer is polymerized via ring-opening bulk polymerization to give a coupler with excellent pipe-coupler adhesion.

EP 0 457 342 A2

## BACKGROUND OF THE INVENTION

### 1. Technical Field

This invention relates to plastic pipe having integrally molded coupler connections. More particularly, the invention pertains to a polynorbornene coupler which is integrally molded to polyolefin pipe ends by reaction injection molding.

### 2. State of the Art

Polyolefin pipe is well-known to be resistant to chemicals, corrosion, and heat, as well as being relatively flexible. Accordingly, such pipe has been employed in drainage, floor heating, and conveying hot spring water, as well as many other uses. With the advent of the myriad of uses for polyolefin pipe, there has been a need for connecting lengths of the pipe together to form a string of pipes.

The joining of such pipe has presented problems. Various types of end connections and joining methods have been devised, but have not been entirely satisfactory. The coupling of individual plastic pipe sections has been troublesome because of the amount of time consumed in making the connection and the attendant expense and labor, as well as the long-term reliability with some types of couplers due to their susceptibility to corrosion.

Conventional coupling methods include the mechanical joint method that utilizes metal or plastic couplers (such as polyolefin) to join two pipe sections together. Metal couplers are not reliable because they readily corrode, thus having no durability. Corrosion will especially take place in coupled pipes exposed to highly acidic hot spring water. It has been proposed to coat metal couplers with a corrosion resistant coating, but again the long term reliability is low.

If polyolefin couplers are employed, the coupled joint is lightweight and chemically resistant. This method has proved to be quite cumbersome, however, because the joining operation involves positioning a coupler between two pipe sections and then heat shrinking or thermally fusing the pipe sections together. Moreover, this method is inappropriate for joining large diameter pipes, such as large drainage pipes.

Efficiency can be enhanced by installing plastic couplers (male/female threaded couplers, flanges, and the like) on both ends of a polyolefin pipe. In this way a lightweight and chemically resistant joint is obtained. However, the bonding of the coupler to the pipe end is complicated because the coupler must be adhesively or thermally bonded onto the pipe.

In another method, it has been proposed to injection mold a coupler attachment around a pipe end. This method requires costly molds and a strong integrally molded coupler with excellent pipe to coupler interface adhesion is difficult to obtain.

Accordingly, there is a need for an integrally molded pipe coupler for connecting plastic pipe sections that is corrosion resistant, easy to manufacture, with excellent pipe-coupler interface adhesion.

## SUMMARY OF THE INVENTION

A primary object of the present invention is to provide a plastic pipe section with an integrally molded coupler having improved pipe to coupler interface adhesion.

It is another object of the invention to provide a lightweight, high strength integrally molded pipe coupler that is corrosion resistant.

A further object of the invention is the provision of a polyolefin pipe having a retrofitted integrally molded coupler on at least one end thereof.

Still another object of the present invention is to provide a method for manufacturing a plastic pipe with an integrally formed coupler.

These and other objects are achieved by placing a mold on at least one end portion of a plastic pipe section, conveying a reactive monomer solution comprising at least one norbornene type monomer and a metathesis catalyst into the mold cavity, and polymerizing the monomer solution to form an integrally molded coupler element on the pipe end. The coupler has excellent adhesion at the pipe-coupler interface, is lightweight, has good strength, and high heat, chemical and corrosion resistance.

These and other objects, features, and advantages of the present invention will appear in the detailed description which follows and will be otherwise apparent to those skilled in the art.

For the purpose of illustration, this invention is a preferred embodiment and modifications thereof are set forth and described below in the accompanying drawings. It is to be understood that this is for the purpose of illustration only and that the invention is not limited thereto.

## BRIEF DESCRIPTION OF THE DRAWINGS

Fig. 1 is a longitudinal cross-sectional view of a pipe section illustrating integrally molded male and female threaded coupler elements at each end.

Fig. 1A is a partly-sectioned longitudinal cross-sectional view showing joined pipe sections.

Fig. 1B is a longitudinal cross-sectional and end view of a pipe section illustrating integrally molded male and female threaded coupler elements with tool pads.

Fig. 1C is a left end view of the integrally molded male coupler shown in Fig. 1B.

Fig. 1D is a right end view of the integrally molded female coupler shown in Fig. 1B.

Fig. 2 is a cross-sectional view showing an end portion of a pipe with a mold for molding the female threaded coupler element shown in Fig. 1.

Fig. 3 is a longitudinal cross-sectional view of a pipe section with integrally molded flanged coupler elements at each end.

Fig. 4 is a longitudinal cross-sectional view showing an end portion of a pipe section with a mold for molding the flanged coupler element shown in Fig. 3.

Fig. 5 is a longitudinal cross-sectional view of a pipe end-portion with an integrally molded frusto-conical male coupler element thereon.

Fig. 6 is a longitudinal cross-sectional view of a pipe end portion with an integrally molded frusto-conical female coupler element thereon.

Fig. 7 is a longitudinal cross-sectional view showing the mold apparatus for integrally molding the frusto-conical male coupler element shown in Fig. 5 to an end-portion of a pipe.

Fig. 8 is a longitudinal cross-sectional view of a pipe section showing a flanged coupler at one end-portion and an end cap at the other end portion.

## DESCRIPTION OF THE INVENTION

In the manufacture of pipes with integrally molded coupler elements of the present invention, one or both end portions of a plastic tube, conduit or pipe (hereinafter pipe) are fitted with a mold. A reaction solution comprising a norbornene type monomer and a metathesis catalyst is conveyed into the cavity formed between the inside wall of the mold and the outer and/or inner annular wall of the pipe proper. Upon conveying the reaction solution into the mold cavity, the solution is polymerized via ring-opening bulk polymerization. The shape of the mold cavity generally defines the configuration of the coupler.

The method of fitting a mold onto a pipe consists of attaching a multi-sectional mold onto the end-portion of a pipe section. In the molding process, the inner and/or outer annular pipe wall in conjunction with the inside mold wall defines the mold cavity. Mold inserts may be employed to define mold cavities of more complex configurations.

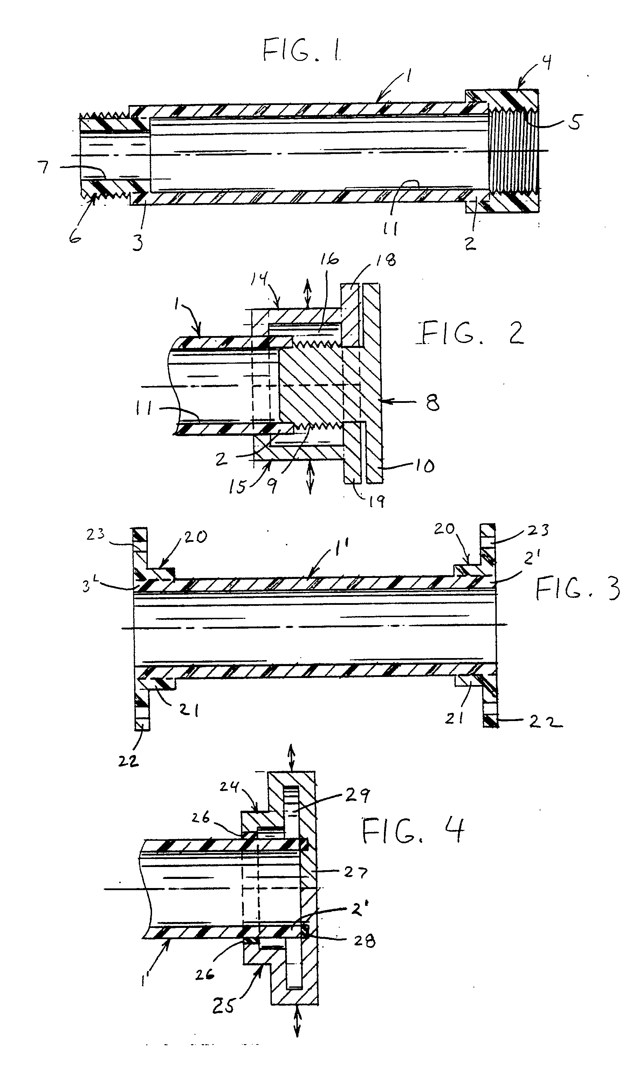

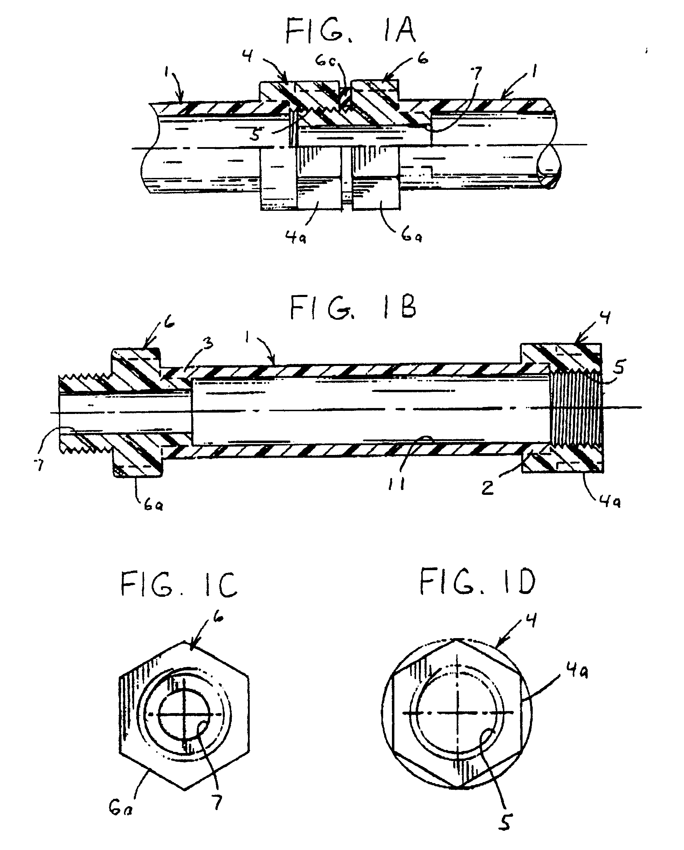

Now referring to the drawings wherein like reference numerals refer to like elements in the different views, there is shown in Fig. 1 longitudinally extending tube, conduit or pipe 1 having a pair of axially spaced end portions 2 and 3. The one end portion 2 of tube 1 has integrally molded female coupler 4 with a centrally threaded bore 5 molded thereon. Coupler 4 is integrally molded to the outer annular wall of tube 1. The other end portion 3 of tube 1 has integrally molded male coupler 6 with a centrally located bore 7 having a threaded outer portion molded thereon. Coupler 6 is integrally molded to the inner annular wall of tube 1. In the field, pipe sections with integrally molded male and female threaded coupler elements are connected simply by threading the male coupler into the female coupler as shown in Fig. 1A. Gasketing material 6c may be installed between the male/female coupler joint if desired. Alternatively, thread tape or sealant and the like may be applied to the threads before connecting the male and female couplers. Referring to Figs. 1B, 1C and 1D male and female coupler elements 6 and 4, respectively, may, if desired, be molded with tool pads 6a and 4a. It should be understood that where desired alternate pipe sections may have both ends fitted with male or female coupler elements, and that the pipe sections may be fitted together in this fashion.

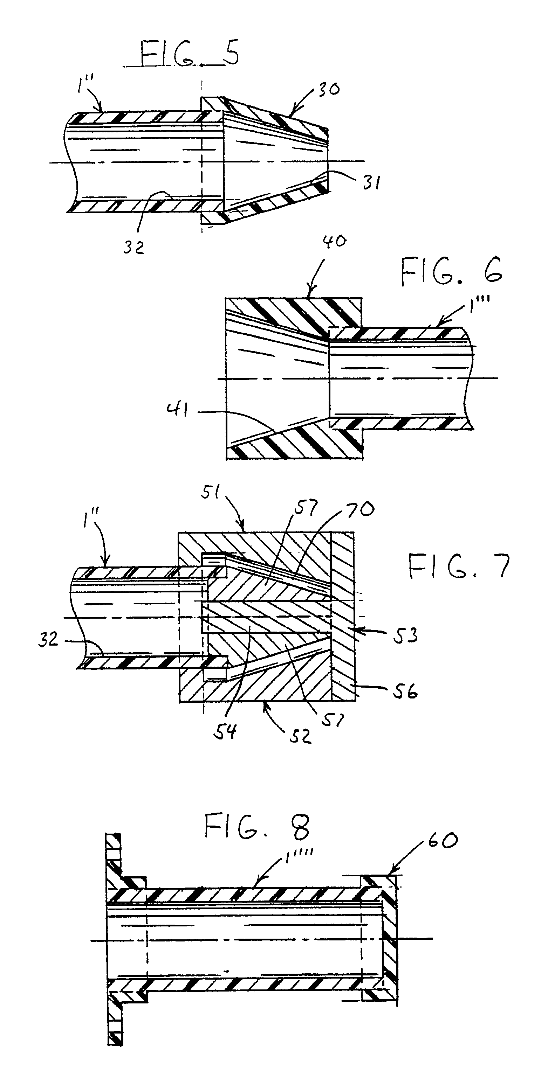

To illustrate the molding of coupler 4 to tube 1 reference is made to Fig. 2. An end mold section 8 having a threaded mandrel 9 suitably connected to a flanged portion 10 has the terminal end of mandrel 9 seated in the central bore 11 of tube 1. A pair of mating semi-cylindrical mold sections 14 and 15 are placed around the one end portion 2 of tube 1 in sealing engagement with flange portion 10. The mold sections 14 and 15 cooperate with end mold section 8 and the outer annular wall of the one end portion 2 of tube 1 to define annular mold cavity 16. Each of mold sections 14 and 15 have suitable flange sections 18 and 19 for securing flange 10 of mold section 8 to provide a closed mold. The mold sections 8, 14, and 15 can be held together by any suitable means including bolting, strapping and clamping. Mold section 14 or 15 is provided with an aperture or injection port (not shown) through the side wall for conveying a reaction solution into the mold cavity.

A modification of the above-described tube is shown in Fig. 3 wherein tube 1' has a pair of spaced couplers 20 suitably molded to the respective end portions 2' and 3' thereof. Each coupler has a cylindrical portion 21 and a flanged portion 22 wherein the flanged portion has a plurality of circumferentially spaced bores 23 therethrough. In the field, pipe sections with flanged coupler elements are connected by placing flanged portions from alternate pipe sections in abutment with one another such that the circumferentially spaced bores from abutting flanges are placed in axial alignment. Bolts, studs or any other suitable fastener means is placed through the axially aligned bores and tightly locked with nuts or any suitable means.

To illustrate the molding of coupler 20 to tube 1', reference is made to Fig. 4. A pair of mold sections 24 and 25 are suitably placed around the end portion 2' of tube 1'. The respective mold sections 24 and 25 may be packed with suitable packing material 26 to provide sealing engagement between the mold portions and the tube. The end portions of the respective mold sections form a flat circular portion 27 which abuts the annular end portion of tube end 2'. Such circular portion 27 may have an annular groove to receive packing material 28 to seal the central bore of tube 1' from the mold cavity 29 defined by the two mating mold sections 24, 25, the circular end portion 27 and the annular outer tube surface of end portion 2' of tube 1'. The mold sections are suitably held together by bolts, straps or clamps (not shown) or any other suitable means. Mold section 24 or 25 is provided with an aperture through the side wall for conveying a reaction solution in to the mold cavity.

A further coupler modification is shown in Figs. 5 and 6 wherein tube 1" has an integrally molded frusto-conical configured coupler 30, and tube 1"' has an integrally molded female frusto-conical configured coupler 40. The coupler 30 has a central bore 31 which is shown as tapered and communicates with the central bore 32 of tube 1". Bore 31, if desired, may be molded as a bore having the same diameter throughout its length. Fig. 6 discloses the tube 1"' having female coupler 40 integrally molded to one end. Coupler 40 has a tapered bore 41 which is configured to be complementary to coupler 30 shown in Fig. 5. Such coupler 40 has a cylindrically shaped outer surface. Tapered bore 41 communicates directly with the central bore of tube 1"'.

In the field, pipe sections with integrally molded male and female frusto-conical configured couplers are connected by inserting the male portion into the mated female portion. Any means for immobilizing the joint connection can be employed, such as adhesive means, threaded means, and the like. A gasket compound or sealant (not shown) may be applied to the coupler elements for sealing engagement of the joint. Again, it should be understood that when desired, alternate pipe sections may have both ends fitted with male or female coupler elements.

To illustrate the molding of coupler 30 to tube 1", reference is made to Fig. 7 wherein the one end of tube 1" is encompassed by a pair of mated mold sections 51 and 52 which firmly encase the end portion of tube 1". A end mold section 53 having a mandrel 54 suitably connected to a flanged portion 56 has the terminal end of the mandrel inserted in axial alignment in and with the central bore 32 of tube 1". A plurality of circumferential inserts 57 are suitably interconnected with mandrel 54 of mold section 53. The inserts cooperate with the mold sections 51 and 52 and the mold section 53 to define a mold cavity 70 that is substantially frusto-conical in shape. The mold sections 51, 52 and 53 are held together by any suitable means including bolting, clamping and strapping. Mold sections 51 or 52 is provided with an aperture (not shown) for conveying a reaction solution into the mold cavity.

Another modification of the invention is shown in Fig. 8 wherein tube"' has an integrally molded coupler 61 on one end portion and an integrally molded end cap 60 on the other end-portion.

With respect to the above described couplers, it will be apparent to one skilled in the art that pipe sections can be fitted with two different coupler configurations. It is obvious that if pipe sections are to be strung together, adjacent couplers must cooperate in mating engagement when joining the pipe sections together.

By using a low viscosity reaction solution, the molding operation can be carried out at comparatively low pressure. Consequently and advantageously, the mold does not need to be manufactured from highly rigid materials requiring costly machining and/or forging procedures. The molds of the present invention can be made from metals, resins, and the like.

The tube, conduit or pipe with integrally molded coupler of the invention is preferably a polyolefin pipe with a firmly bonded ring-opened polynorbornene coupler. The coupler is formed in situ around the outer or inner annular pipe wall as shown in the accompanying figures by ring-opening bulk polymerization of a norbornene type monomer.

When ring-opening polymerization is carried out with a norbornene type monomer having a polycyclic structure (i.e., tricyclic or higher), the resultant product has improved mechanical strength and heat resistance. Moreover, the polymer so obtained has very low hygroscopicity and a density of less than 1.1. Compared to other plastics, the couplers of this invention are lightweight. Additionally, in employing a low viscosity reaction solution, many complex-shaped or large-sized couplers can easily be made by utilizing reaction injection molding (RIM) techniques.

Polyolefin pipe materials suitable for use in the present invention are high density polyethylene (PE), medium density PE, low density PE, cross-linked PE, ethylene-propylene copolymer, ethylene-butene-1 copolymer, polypropylene (PP), polybutene-1, polypentene-1, poly 4-methylpentene-1, ethylene-propylene rubber (EPR), ethylene-propylene-diene terpolymer (EPDM), high ethylene-content ethylene-vinyl acetate copolymer, and the like, and mixtures thereof.

The elastomer in the polyolefins is a cross-linked or partially cross-linked polymer. Among the polyolefins, a non-cross-linked plastic polymer exhibits better pipe-coupler interface adhesion relative to a cross-linked elastomer. However, a mixture of a partially cross-linked elastomer (e.g., EPR or EPDM), and a given amount of non-cross-linked plastic (e.g., PE or PP), exhibits the properties of a thermoplastic elastomer. When such a mixture is used, it produces a pipe with elastomeric properties without sacrificing the good adhesive property of plastic.

In addition to standard straight pipe sections, the pipes of the present invention can be tee-shaped (T-shaped), Y-shaped, elbow-shaped (L-type), and the like. When referring to T and Y conduit, tubular, or pipe sections, it is obvious that such configurations have more than two end portions.

The low viscosity reaction solution employed in this invention comprises a ring-opening metathesis catalyst, and a cocatalyst. Various optional additives can be added to the reaction solution.

Employing a norbornene type monomer with at least three rings produces a polymer with a high thermal deformation temperature.

A thermoset norbornene polymer derived from at least 10%, preferably more than 30%, by weight of a cross-linking type monomer is preferred.

Examples of suitable norbornene type monomers are bicyclic monomers such as norbornene, norbornadiene and the like; tricyclic monomers such as dicyclopentadiene or dihydrodicyclopentadiene, and the like, tetracyclic monomers such as tetracyclododecene, and the like; pentacyclic monomers such as tricyclopentadiene, and the like; heptacyclic monomers such as tetradicyclopentadiene, and the like. The alkyl substituted derivatives (e.g., methyl, ethyl, propyl, butyl substituents and the like); alkylidene substituted derivatives (e.g., ethylidene substituents and the like); aryl substituted derivatives (e.g., phenyl, tolyl, naphthyl substituents, and the like); and polar derivatives such as ester, ether, cyano, and halogen substituents, and the like of the foregoing monomer types are also within the scope of this invention.

Due to their greater availability, reactivity and heat resistance tricyclic to pentacyclic monomers are preferred.

The cross-linking type monomers are polycyclic norbornene type monomers containing at least two reactive double bonds. Suitable examples are dicyclopentadiene, tricyclopentadiene, tetracyclopentadiene, and the like. When the norbornene type monomer employed is a cross-linking type monomer, the addition of other cross-linking type monomers are not necessary.

The norbornene type monomer can be employed as a single monomer component to obtain a homopolymer, or a mixture consisting of two or more monomers can be employed to obtain copolymer compositions.

A polycyclic norbornene monomer (i.e., with more than three rings) can be obtained by the heat treatment of dicyclopentadiene at 120-250 °C in an inert gas atmosphere in the presence of an antioxidant for 0.5-20 hours. By heat treating dicyclopentadiene, a monomer mixture consisting of cyclopentadiene trimer and unreacted dicyclopentadiene can be obtained.

A cycloolefin such as cyclobutene, cyclopentene, cyclopentadiene, cyclooctene, and cyclododecene may be mixed with the foregoing monomers, provided that the properties of the resulting polymer are not impaired.

Any known metathesis catalyst suitable for the ring-opening polymerization of norbornene type monomers can be employed in this invention (see, for example, Japanese Kokai application Nos. 58-127728, 58-129013, 59-51911, 60-79035, 60-186511, and 61-126115).

Examples of suitable metathesis catalysts are the halides, oxyhalides, oxides, organic ammonium salts of tungsten, molybdenum, tantalum, and the like. Examples of suitable cocatalysts are alkylaluminum halides, alkoxyalkylaluminum halides, aryloxyalkylaluminum halides, organotin compounds, and the like.

In addition to the catalyst and cocatalyst, an activating agent can be employed as disclosed in Japanese Kokai application No. 60-79035. Halohydrocarbons such as chloroform, carbon tetrachloride, hexachloropentadiene, or metal halides such as silicon tetrachloride, germanium tetrachloride, and lead tetrachloride can be used as activating agents.

The amount of the metathesis catalyst employed ranges from about 0.01 to about 50 mmoles, preferably about 0.1 to about 10 mmoles per mole of norbornene based monomer utilized. The amount of cocatalyst utilized ranges from about 0.1 to about 200 mole ratio based on the catalyst component, preferably in the 2 to 10 (mole ratio) range.

Preferably, the metathesis catalyst and cocatalyst are dissolved in the monomer. So long as product quality is not adversely affected, the catalyst and cocatalyst can be suspended or dissolved in an insert solvent before introduction into the monomer.

The product polymer properties of the outer layer can be modified by the addition of additives such as antioxidants, filler materials, reinforcing materials, pigments, coloring agents, foaming agents, flame retardants, lubricants, elastomers, and/or dicyclopentadiene type hydrogenated thermopolymer resins. The additives can be added to either one or both reactant solutions, or may be added to a third reactant solution.

Suitable antioxidants include phenolic, phosphorus, or amine type compounds that are commonly used in plastics and rubbers.

Suitable fillers include inorganic materials such as milled glass, long glass fibers, glass mat, carbon black, talc, calcium carbonate, mica, and the like.

Suitable reinforcing materials include fibrous fillers such as glass and carbon fibers and the like.

Suitable elastomers include natural rubber, polybutadiene, polyisoprene, styrene-butadiene copolymer (SBR), styrene-butadiene-styrene block copolymer (SBS), styrene-isoprene-styrene block copolymer (SIS), ethylene-propylene-diene terpolymer (EPDM), ethylene-vinyl acetate copolymer (EVA), and their hydrogenated derivatives.

Following the placement of the mold onto the pipe end portion, a reactive solution comprising at least one norbornene type monomer, a metathesis catalyst, cocatalyst, and optional additives is conveyed into the mold cavity that is formed between the inside mold surfaces and the inner and/or outer annular pipe wall surfaces. The reactive solution is then bulk polymerized (via ring-opening polymerization) in contact with the pipe wall surface. Following the polymerization reaction (after allowing for sufficient cooling), the mold sections are removed and an integrally molded coupler comprising a ring-opened bulk polymerized polymer is obtained.

In molding the integrally molded couplers of the present invention, reaction injection molding (RIM) is preferred. In a preferred RIM process, a norbornene type monomer solution is divided into two portions and placed into two separate containers. A metathesis catalyst is added to one of the containers and a cocatalyst is added to the other container to yield two stable reactant solutions. The solutions are stored under inert atmospheric conditions. In the molding operation, the two reactant solutions are mixed to obtain a reactive solution that is conveyed to a mold of a desired coupler configuration where the polymerization is carried out (i.e. the reactant streams are conveyed to the head of an impingement mixing device and instantly mixed). The reaction solution is injected into a preheated RIM mold and bulk polymerized to obtain ane integrally molded coupler with excellent pipe to coupler interface adhesion. This invention is not limited to two reactant streams in that additional reactant streams can be provided for the addition of other components to the reaction solution.

Besides an impingement mixer, a dynamic or static mixer can be employed as low pressure feeders. After mixing, the reactive solution can be conveyed (e.g., poured or injected) into a preheated mold in several portions (batch feeding) as disclosed in Japanese Kokai application No. 59-51911 and U.S. patent 4,426,502. Alternatively, the reactive solution can be injected in a continuous mode.

The apparatus utilized in the latter embodiment is compact in comparison to an impingement mixing device. Additionally, the latter devices can be operated under lower pressure parameters. Furthermore, the injection rate can be lowered when utilizing large amounts of filler materials, allowing the homogeneous impregnation of reaction solution into the filler materials.

The mold cavity can be filled with an inert gas atmosphere (such as nitrogen) but this is not necessary for operation of the invention. Generally, the mold pressure in the range of about 0.1 to about 10 $kg/cm^2$, and more preferably about 5 $kg/cm^2$ is employed. The mold temperature employed ranges from about 10 to about 150° C, preferably about 30 to about 100° C.

The polymerization time can be selected individually but is generally less than 20 minutes and, preferably, about 5 minutes or less.

The following examples will show one skilled in the art how to operate within the scope of the present invention and are not intended to serve as a limitation on the scope thereof. In these examples all parts are expressed as parts by weight and all percentages are expressed as percentages by weight, unless otherwise indicated.

Example 1

Commercially available polyethylene pipe (inside diameter 300 mm, wall thickness 3 mm, length 3000 mm) were fitted at both pipe end portions with coupler mold sections as shown in Fig. 4. The mold cavities were substantially equivalent to the flange coupler structure 20 shown in Fig. 3 (thickness 15 mm. maximum diameter 340 mm, length 125 mm). The mold was equipped with an injection port for conveying the reaction solution into the mold cavity.

Optionally, a packing material can be placed between the pipe and mold contact area to prevent the leakage of reaction solution (see Fig. 4).

The pipe and mold assembly were heated at 60° C and then nitrogen gas was fed through the injection port into the mold cavity.

Dicyclopentadiene (DCP hereafter) containing 2% by weight of a phenolic antioxidant (Irganox 259, Ciba-Geigy Co.) was divided into equal portions and placed in two separate containers. In one container, diethylaluminum chloride (DEAC), n-propanol and silicon tetrachloride were added to the DCP to give 33, 42.9, and 20 mmolar concentrations, respectively. In the other container, tri-(dodecyl) ammonium molybdate was added to give a 4 mmolar concentration based on DCP.

The two reactant solutions were mixed at a 1:1 ratio and conveyed into the mold cavity through the injection port. After injection, the reaction solution was allowed to polymerize for six minutes to form an integrally molded polymer coupler. The entire operation was carried out under a nitrogen atmosphere.

The mold sections were separated to obtain a pipe section with an attached coupler. The coupler had excellent adhesion to the pipe surface. The two parts did not separate upon pulling. Bolt holes were cut into the flange of the coupler at circumferentially spaced intervals.

## Claims

1. A coupler equipped tubular section comprising a plastic tube body having at least two end portions and an integrally molded coupler on at least one end portion thereof, said coupler comprising a ring-opened norbornene polymer derived from a reaction solution comprising at least one norbornene monomer, a metathesis catalyst and cocatalyst, wherein said monomer is polymerized around and in contact with said end portion.

2. The coupler equipped tubular section of claim 1 wherein said tube body is a polyolefin.

3. The coupler equipped tubular section of claim 2 wherein said polyolefin is selected from the group consisting of high density polyethylene, medium density polyethylene, low density polyethylene, cross-linked polyethylene, ethylene-propylene copolymer, ethylene-butene-1 copolymer, polypropylene, polybutene-1, polypentene-1, poly 4-methylpentene-1, ethylene-propylene rubber, ethylene-propylene-diene terpolymer, high ethylene-content ethylene-vinyl acetate copolymer, and mixtures thereof.

4. The coupler equipped tubular section of claim 1 wherein said norbornene monomer is selected from the group consisting of norbornene, norbornadiene, dicyclopentadiene, dihydrodicyclopentadiene, tetracyclododecene, tricyclopentadiene, tetracyclopentadiene, and mixtures thereof, and the alkyl, alkylidene, aryl, and polar derivatives thereof.

5. The coupler equipped tubular section of claim 4 wherein said norbornene monomer is at least tricyclic.

6. The coupler equipped tubular section of claim 4 wherein said norbornene monomer contains at least 10% by weight of a comonomer containing at least two reactive double bonds.

7. The coupler equipped tubular section of claim 1 wherein said reaction solution further comprises an activating agent.

8. The coupler equipped tubular section of claim 7 wherein said activating agent is silicon tetrachloride.

9. The coupler equipped tubular section of claim 1 wherein an end portion of said tube body has an integrally molded end cap thereon.

10. The coupler equipped tubular section of claim 1 wherein said tube body is selected from the group consisting of a conduit or pipe.

11. The coupler equipped tubular section of claim 10 wherein said tube body is a T-configuration, a Y-configuration, an L-configuration, or a straight configuration.

12. A method for the production of a coupler equipped plastic tubular section comprising:
    a) providing a tubular section having at least two end portions;
    b) enclosing at least one end portion of said tubular section within a mold wherein the inner surface of the mold in cooperation with a surface of the end portion of the tube body define a mold cavity;
    c) feeding a reaction solution comprising at least one norbornene monomer and a metathesis catalyst into said mold cavity; and
    d) polymerizing said reaction solution to integrally form a coupler thereon.

13. The method of claim 12 wherein said tubular body is a polyolefin.

14. The method of claim 13 wherein said polyolefin is selected from the group consisting of high density polyethylene, medium density polyethylene, low density polyethylene, cross-linked polyethylene, ethylene-propylene copolymer, ethylene-butene-1 copolymer, polypropylene, polybutene-1, polypentene-1, poly 4-methylpentene-1, ethylene-propylene rubber, ethylene-propylene-diene terpolymer, high ethylene-content ethylene-vinyl acetate copolymer, and mixtures thereof.

15. The method of claim 12 wherein said norbornene monomer is selected from the group consisting of norbornene, norbornadiene, dicyclopentadiene, dihydrodicyclopentadiene, tetracyclododecene, tricyclopentadiene, tetracyclopentadiene, and mixtures thereof, and the alkyl, alkylidene, aryl, and polar derivatives thereof.

16. The method of claim 15 wherein said norbornene monomer is at least tricyclic.

17. The method of claim 15 wherein said norbornene monomer contains at least 10% by weight of a comonomer containing two reactive double bonds.

18. The method of claim 12 wherein said reaction solution further comprises an activating agent.

19. The method of claim 18 wherein said activating agent is silicon tetrachloride.

20. The method of claim 12 wherein said mold is heated from about 10 to about 150° C.

FIG. 1

FIG. 2

FIG. 3

FIG. 4

# FIG. 1A

# FIG. 1B

# FIG. 1C

# FIG. 1D

FIG. 5

FIG. 6

FIG. 7

FIG. 8

11